**Europäisches Patentamt**

(19) **European Patent Office**

**Office européen des brevets**

(11) Veröffentlichungsnummer: **0 048 727**
**B1**

(12) # EUROPÄISCHE PATENTSCHRIFT

(45) Veröffentlichungstag der Patentschrift:
25.01.84

(51) Int. Cl.³: **B 62 D 55/20**

(21) Anmeldenummer: **81900815.2**

(22) Anmeldetag: **28.03.81**

(86) Internationale Anmeldenummer:
**PCT/DE 81/00053**

(87) Internationale Veröffentlichungsnummer:
**WO 81/02873 (15.10.81 Gazette 81/24)**

(54) **SPURKETTE FÜR KETTENFAHRZEUG.**

(30) Priorität: **03.04.80 DE 3013026**

(43) Veröffentlichungstag der Anmeldung:
**07.04.82 Patentblatt 82/14**

(45) Bekanntmachung des Hinweises auf die Patenterteilung:
**25.01.84 Patentblatt 84/4**

(84) Benannte Vertragsstaaten:
**FR**

(56) Entgegenhaltungen:
**DE - A - 2 038 144**
**DE - A - 2 844 107**
**FR - A - 1 567 767**
**US - A - 3 659 112**

(73) Patentinhaber: **Intertractor Viehmann GmbH. & Co,
Hagenerstrasse 325, D-5820 Gevelsberg (DE)**

(72) Erfinder: **BRUNN, Hansjoachim, Viktorstrasse 10,
D-2845 Damme (DE)**

(74) Vertreter: **Patentanwälte Dipl.-Ing. Conrad Köchling
Dipl.-Ing. Conrad-Joachim Köchling, Fleyer Strasse 135,
D-5800 Hagen (DE)**

Die Erfindung betrifft eine Spurkette für ein Kettenfahrzeug mit einem Gelenkglied zum Verbinden der zwei Kettenenden, wobei das Gelenkglied folgende Merkmale umfasst:

a) es sind zwei zueinander parallel angeordnete Gliedwangen vorgesehen,

b) jede Gliedwange besteht aus zwei einander überlappenden Teilen, in welchen je eine Bohrung zur Aufnahme eines Gelenkbolzens angeordnet ist,

c) die miteinander korrespondierenden Anlageseiten der Gliedwangenteile sind zur Schwenkebene letzterer parallel verlaufend angeordnet,

d) an den miteinander korrespondierenden Anlageseiten der Gliedwangenteile sind ineinander greifende Verzahnungen vorgesehen, deren Zähne und Zahnlücken auf konzentrischen Kreisen verlaufen, deren Zentren auf einer Gelenkbolzenachse liegen,

e) es ist eine beide Gliedwangen überbrückende Bodenplatte vorgesehen, die mittels letztere durchgreifender und in Bohrungen der Gliedwangen eingreifender Schrauben mit den Gliedwangen lösbar verbunden ist.

Ein Verbindungs-Gelenkglied dieser Gattung ist aus der US-PS 3 659 112 bekannt.

Hierbei sind die Verzahnungen dachförmig profiliert.

Zudem sind zu den Gelenkbolzen parallel verlaufende, die miteinander korrespondierenden Gliedwangenteile zueinander drängende Befestigungsschrauben vorgesehen, mit deren Hilfe die miteinander korrespondierenden Gliedwangenteile beim Zusammenschliessen der Kettenenden zueinander lagerichtig ausgerichtet und im Betriebszustand auch lagerichtig gehalten werden.

Ferner sind die Bohrungen zur Aufnahme von Bodenplatten-Befestigungsschrauben jeweils in einem der miteinander korrespondierenden Gliedwangenteile angeordnet.

Hierbei besteht aber der Nachteil, dass bereits bei geringfügig gelockerten, die Gliedwangenteile durchgreifenden Verbindungsschrauben die lagerichtige Anordnung der Gliedwangenteile zueinander verloren geht.

Darüberhinaus unterliegen jene Verbindungsschrauben hohen Zugkräften.

Der Erfindung liegt nun die Aufgabe zugrunde, eine Spurkette vorbeschriebener Gattung zu vereinfachen und deren Funktionssicherheit zu erhöhen.

Die Lösung dieser Aufgabe kennzeichnet sich durch folgende Merkmale:

Die Verzahnungen sind derart hinterschnitten ausgebildet, dass diese durch Zugkraft beeinflusst auf die miteinander korrespondierenden Gliedwangenteile zueinander gerichtete Querkräfte ausüben und die Bodenplatte ist mit den Gliedwangen zug- und querkraftbelastungsfrei verbunden.

Durch diese Massnahmen werden nunmehr die einander überlappenden, verzahnten Gliedwangenteile des teilbaren Gelenkgliedes beim Schliessen der Kette selbsttätig zueinander lagerichtig ausgerichtet und unter Zugbelastung ständig miteinander formschlüssig verbunden, ohne dass es die Gliedwangenteile durchgreifender Verbindungsschrauben oder dergl. bedarf.

Letztere sind somit entbehrlich.

Dabei ist auch gewährleistet, dass die Bodenplatte die zwangsläufige Justierung der Gliedwangenteile nicht stört. Letztere zentrieren sich selbständig.

Dabei ist es vorteilhaft, wenn beim vorbeschriebenen Gegenstand die Zentren der konzentrisch um eine Gelenkbolzenachse angeordneten Kreise, entlang welchen die Zähne und Zahnlücken verlaufend angeordnet sind, auf der Gelenkbolzenachse des benachbarten oder eines diesem folgenden Kettengliedes liegen.

Hierdurch erhält man gegenüber dem Stand der Technik relativ flach gekrümmte Zähne und Zahnlücken, die auch bei relativ kleiner Kettenteilung ausreichend Platz zur Anordnung der Bohrungen zur Aufnahme der Bodenplatten-Befestigungsschrauben bieten, wobei weiterhin möglich ist, die Gliedwangenteile zum Zwecke des Schliessens bzw. Öffnens der Gliedwangenverbindungen die Gliedwangenteile um eine Gelenkachse zu verschwenken.

Eine vorteilhafte Weiterbildung des vorbeschriebenen Gegenstandes kennzeichnet sich dadurch, dass in beiden Gliedwangenteilen beider Gliedwangen jeweils mindestens eine Bohrung zur Aufnahme einer Bodenplatten-Befestigungsschraube vorgesehen sind.

Hierdurch ist auch ein unbeabsichtigtes Öffnen der Gliedwangenverbindung bei völlig entlasteter Kette ausgeschlossen.

Zudem kennzeichnet sich eine fertigungstechnisch günstige Ausgestaltung des vorbeschriebenen Gegenstandes dadurch, dass die Zähne und Zahnlücken abgerundete Kanten aufweisen.

Ein Ausführungsbeispiel der Erfindung ist in der Zeichnung dargestellt und wird im folgenden näher beschrieben.

Es zeigen:

Fig. 1 einen Teil einer Spurkette für Kettenfahrzeuge mit einem teilbaren Gelenkglied von oben gesehen, teilweise aufgebrochen.

Fig. 2 desgleichen in der Vorderansicht ebenfalls teilweise aufgebrochen dargestellt.

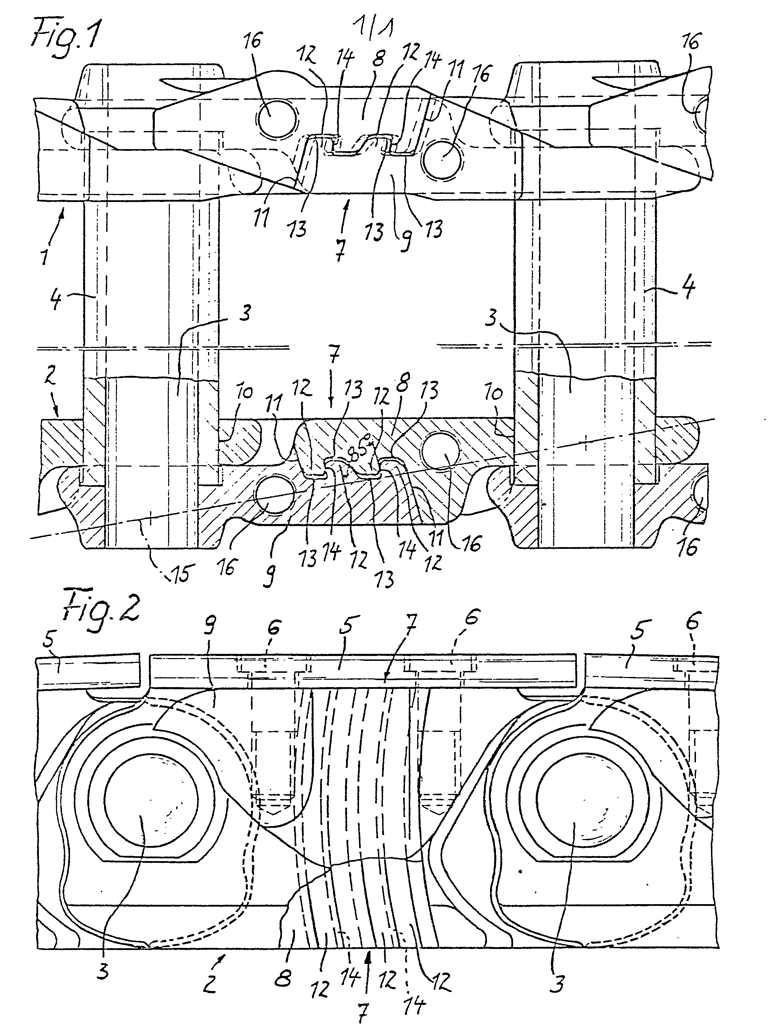

Die Spurkette umfasst eine Mehrzahl miteinander gelenkig verbundener Glieder, die jeweils aus zwei zueinander parallel verlaufenden Gliedwangen 1 und 2 bestehen, die an den Endteilen Bohrungen zur Aufnahme von Gelenkbolzen 3 und Hülsen 4 aufweisen.

Letztere sind in an sich bekannter Weise mit Pressitz angeordnet, so dass diese nur unter Aufwendung sehr hoher Kräfte gelöst werden können. Ferner sind die Gliedwangen 1, 2 überbrückende Bodenplatten 5 vorgesehen, die mittels Schrauben 6 an den Seitenwangen lösbar befestigt sind. Um die Enden einer solchen Kette bequem, d.h. mit einfachen Werkzeugen – ohne Presswerkzeuge –, miteinander verbinden zu können, ist ein teilbares Gelenkglied 7 vorgesehen, dessen Gliedwangen 1, 2 jeweils aus zwei als Schmiede- oder Gussstück ausgebildeten Gliedwangenteilen 8 und 9 bestehen, die einander überlappend angeordnet sind.

In jedem Gliedwangenteil ist eine Bohrung 10 zur Aufnahme einer mit Presssitz anzuordnenden Hülse 4 bzw. einer Hülse 4 und eines Gelenkbolzens 3 vorgesehen.

In den in der Schwenkebene der Gliedwangenteile 8, 9 verlaufenden, miteinander korrespondierenden Anlageseiten 11 sind ineinander greifende Verzahnungen vorgesehen, deren Zähne 12 und Zahnlücken 13 entlang konzentrischer Kreise verlaufen, deren Zentren auf der Achse eines dem teilbaren Gelenkglied benachbarten, unteilbaren Kettengliedes liegen.

Bei kleiner Kettenteilung ist es vorteilhaft, die Verzahnungen so auszubilden, dass die Zentren der konzentrischen Kreise auf der Mittelachse eines noch weiter vom teilbaren Glied entfernbaren Gelenkbolzen liegen.

Ferner sind die Flanken 14 der Zähne 12, die bei Zugbelastung aneinander liegen, so hinterschnitten ausgebildet, dass bei Zugbelastung die miteinander korrespondierenden Gliedwangenteile 8, 9 zueinander gedrängt werden.

Dabei verlaufen jene Zahnflanken 14 im spitzen Winkel zur Zugkraftwirkungslinie 15, die sich von Mitte zu Mitte der Bohrungen 10 erstreckt. In jedem Gliedwangenteil 8, 9 ist eine Gewindebohrung 16 zur Aufnahme einer Bodenplatten-Befestigungsschraube 6.

Die Schraubenbohrungen in der Bodenplatte 5 sind im Durchmesser wesentlich grösser als die Schrauben, so dass die Schrauben 6 keinerlei justierende Wirkungen auf die Gliedwangenteile 8, 9 ausüben.

Die Kanten der Verzahnungen sind abgerundet. Ausserdem sind die Verzahnungen so eng toleriert, dass alle Zähne 12 unter evtl. plastischer Verformungen letzterer tragen.

## Patentansprüche

1. Spurkette für ein Kettenfahrzeug mit einem Gelenkglied zum Verbinden der zwei Kettenenden, das folgende Merkmale umfasst:

a) Es sind zwei zueinander parallel angeordnete Gliedwangen (1, 2) vorgesehen.

b) Jede Gliedwange (1, 2) besteht aus zwei einander sich überlappenden Teilen (8, 9), in welchen je eine Bohrung zur Aufnahme eines Gelenkbolzens (3) angeordnet ist.

c) Die miteinander korrespondierenden Anlageseiten der Gliedwangenteile (8, 9) sind zur Schwenkebene letzterer parallel verlaufend angeordnet.

d) An den miteinander korrespondierenden Anlageseiten der Gliedwangenteile (8, 9) sind ineinander greifende Verzahnungen vorgesehen, deren Zähne (12) und Zahnlücken (13) auf konzentrischen Kreisen verlaufen, deren Zentren auf einer Gelenkbolzenachse liegen.

e) Es ist eine beide Gliedwangen (1, 2) überbrückende Bodenplatte (5) vorgesehen, die mittels letztere durchgreifender und in Bohrungen der Gliedwangen eingreifender Schrauben (6) mit den Gliedwangen lösbar verbunden ist, gekennzeichnet durch folgende Merkmale:

f) Die Verzahnungen (12, 13) sind derart hinterschnitten ausgebildet, dass diese durch Zugkraft beeinflusst auf die miteinander korrespondierenden Gliedwangenteile (8, 9) zueinander gerichtete Querkräfte ausüben und

g) Die Bodenplatte (5) ist mit den Gliedwangenteilen (8, 9) zug- und querkraftbelastungsfrei verbunden.

2. Spurkette nach Anspruch 1, dadurch gekennzeichnet, dass die Zentren der konzentrisch um eine Gelenkbolzenachse angeordneten Kreise, entlang welchen die Zähne (12) und Zahnlücken (13) verlaufend angeordnet sind, auf der Gelenkbolzenachse des benachbarten oder eines diesem folgenden Kettengliedes liegen.

3. Spurkette nach Anspruch 1 und 2, dadurch gekennzeichnet, dass in beiden Gliedwangenteilen (8, 9) beider Gliedwangen (1, 2) jeweils mindestens eine Bohrung (16) zur Aufnahme einer Bodenplattenbefestigungsschraube (6) vorgesehen sind.

4. Spurkette nach einem der vorhergehenden Ansprüche, dadurch gekennzeichnet, dass die Zähne (12) und Zahnlücken (13) abgerundete Kanten aufweisen.

## Revendications

1. Chenille pour véhicule à chenilles, avec, pour relier les deux extrémités de la chenille, un maillon articulé qui comprend les particularités suivantes:

a) deux flasques de maillon (1, 2) disposés parallèlement entre eux sont prévus,

b) chaque flasque (1, 2) se compose de deux parties (8, 9) qui se chevauchent, dans chacune desquelles est disposé un alésage pour recevoir un boulon d'articulation (3),

c) les côtés adjacents des parties de flasque de maillon (8, 9) correspondant l'un à l'autre sont, par rapport au plan de pivotement de ces dernières, disposés parallèlement,

d) sur les côtés adjacents des parties de flasque de maillon (8, 9) correspondant l'un à l'autre sont prévues des dentures en prise mutuelle dont les dents (12) et intervalles (13) entre dents suivent des cercles concentriques dont les centres sont situés sur un axe de boulon d'articulation,

e) il est prévu une semelle (5) qui enjambe les deux flasques de maillon (1, 2) et qui, au moyen de vis (6) qui la traversent et pénètrent dans des alésages des flasques de maillon, est reliée de façon amovible à ces flasques, remarquable par les caractéristiques suivantes:

f) les dentures (12, 13) sont conçues avec une contredépouille telle qu'elles exercent sur les parties de flasque de maillon (8, 9) correspondant l'une à l'autre, sous l'influence d'un effort de traction, des efforts transversaux dirigés les uns vers les autres, et

g) la semelle (5) est reliée aux parties de flasque de maillon (8, 9) sans contrainte de traction et d'effort transversal.

2. Chenille selon la revendication 1, caractérisée en ce que les centres des cercles disposés concentriquement à un axe de boulon d'articulation et le long desquels les dents (12) et les intervalles (13) entre dents sont disposés sont situés sur l'axe du boulon d'articulation du maillon voisin ou d'un maillon qui fait suite à celui-ci.

3. Chenille selon la revendication 1 et 2, caractérisée en ce que dans chacune des deux parties de flasque de maillon (8, 9) des deux flasques de maillon (1, 2) est prévu au moins un alésage (16) pour recevoir une vis (6) de fixation de semelle.

4. Chenille selon l'une des revendications précédentes, caractérisée en ce que les dents (12) et intervalles (13) entre dents présentent des arêtes arrondies.

**Claims**

1. Track chain for a tracked vehicle with a hinged link for connecting the two ends of the chain, the hinge link comprising the following features:

a) two link cheeks (1, 2) arranged parallel to one another are provided,

b) each link cheek (1, 2) consists of two parts (8, 9) which overlap one another and in each of which a bore for receiving a hinge pin (3) is provided,

c) the mutually corresponding contact parts of the link-cheek parts (8, 9) are arranged to extend parallel to the swivelling plane of these parts,

d) on the mutually corresponding contact sides of the link cheek parts (8, 9), there are toothed portions which engage in one another, and the teeth (12) and tooth gaps (13) of which run on concentric circles, the centres of which lie on a hinge-pin axis,

e) there is a base plate (5) which bridges the two link cheeks (1, 2) and which is connected releasably to the link cheeks by means of screws (6) which pass through the base plate and which engage in bores in the link cheeks, characterised by the following features:

f) the toothed portions (12, 13) are made undercut in such a way that, influenced by tensile force, they exert transverse forces directed towards one another on the link-cheek parts (8, 9) corresponding to one another, and

g) the base plate (5) is connected to the link-cheek parts (8, 9) so as to be free of tensile and transverse loads.

2. Track chain according to claim 1, characterised in that the centres of the circles, which are arranged concentrically around a hinge-pin axis and along which the teeth (12) and tooth gaps (13) are arranged to run, lie on the hinge-pin axis of the adjacent chain link or of a chain link following this.

3. Track chain according to claims 1 and 2, characterised in that in each of the two link-cheek parts (8, 9) of the two link cheeks (1, 2) there is at least one bore (16) for reciving a base plate fastening screw (6).

4. Track chain according to one of the preceding claims, characterised in that the teeth (12) and tooth gaps (13) have rounded edges.

Fig.1

Fig.2